# EUROPEAN PATENT APPLICATION

(11) **EP 4 703 022 A1**
(43) Date of publication of application: **04.03.2026**
(21) Application number: 24796522.1
(22) Date of filing: 16.02.2024
(51) Int. Cl.: B01D 53/053, B01D 53/62

(54) **DEVICE FOR RECOVERING CARBON DIOXIDE**

(30) Priority: 27.04.2023 JP 2023073147
(71) Applicant: Niterra Co., Ltd., Nagoya-shi, Aichi 461-0005 (JP)
(72) Inventor: GOTO Yuta, Nagoya-shi, Aichi 461-0005 (JP)
(74) Representative: Grünecker Patent- und Rechtsanwälte PartG mbB
(86) International application number: PCT/JP2024/005403
(87) International publication number: WO 2024/224763

(57) **Abstract**

Provided is a recovery apparatus (10) which can increase the recovery rate of high-concentration carbon dioxide. The recovery apparatus includes a first separation device (11) for separating carbon dioxide from a carbon dioxide-containing gas by pressure swing adsorption, and a second separation device (12) disposed downstream of the first separation device and connected thereto. The first separation device includes an adsorption column (14), a first pressurization device (17) for supplying to the adsorption column a first pressurized gas obtained by pressurizing the gas, a vacuum pump (18) for sucking a desorption gas containing carbon dioxide desorbed from an adsorbent within the adsorption column, and an introduction pipe (23) for introducing part of the desorption gas into the adsorption column as a cleaning gas. The second separation device includes a concentration unit (36) and a second pressurization device (39) for supplying to the concentration unit a second pressurized gas obtained by pressurizing the desorption gas. The concentration unit concentrates carbon dioxide contained in the second pressurized gas, and the pressure of the second pressurized gas is higher than the pressure of the first pressurized gas.

## Description

### TECHNICAL FIELD

The present invention relates to an apparatus for recovering carbon dioxide by using pressure swing adsorption.

### BACKGROUND ART

A prior art technique disclosed in Patent Document 1 relates to a carbon dioxide recovery apparatus which uses pressure swing adsorption, in which the affinity of carbon dioxide to an adsorbent is changed by pressure. The prior art technique uses a VPSA-type separation device in which an adsorption operation is performed near atmospheric pressure, and desorption and regeneration are performed by reducing the pressure by a vacuum pump. The prior art technique also uses another VPSA-type separation device connected to the downstream side of the above-mentioned VPSA-type separation device.

### PRIOR ART DOCUMENT

### PATENT DOCUMENT

Patent Document 1: Japanese Patent No. 3084248

### SUMMARY OF THE INVENTION

### PROBLEM TO BE SOLVED BY THE INVENTION

In the VPSA-type separation device, part of a gas desorbed from an adsorbent within an adsorption column is introduced into the adsorption column as a cleaning gas so as to increase the concentration of carbon dioxide within the adsorption column, whereby high-concentration carbon dioxide is recovered. Therefore, when the amount of the cleaning gas introduced into the adsorption column is increased, although the concentration of recovered carbon dioxide increases, the amount of recovered gas decreases (the recovery rate decreases). Meanwhile, when the amount of the cleaning gas is reduced, although the recovery rate increases, the concentration of carbon dioxide decreases. Fine control of the amount of the cleaning gas and the pressure of the adsorption column is needed so as to simultaneously realize recovery of high-concentration carbon dioxide and high recovery rate.

In the prior art technique, since a blower is connected to the upstream separation device and the downstream separation device, the pressure of the downstream adsorption column becomes approximately the same as the pressure of the upstream adsorption column or becomes lower than the pressure of the upstream adsorption column. The prior art technique is not satisfactory in terms of simultaneous achievement of recovery of high-concentration carbon dioxide and high recovery rate.

The present invention has been accomplished in order to solve this problem, and an object of the present invention is to provide a recovery apparatus which can increase the recovery rate of high-concentration carbon dioxide.

### MEANS FOR SOLVING THE PROBLEM

A first mode for achieving this object is a recovery apparatus for recovering carbon dioxide which comprises a first separation device for separating carbon dioxide from a carbon dioxide-containing gas by pressure swing adsorption, and a second separation device disposed downstream of the first separation device and connected thereto. The first separation device includes an adsorption column, a first pressurization device for supplying to the adsorption column a first pressurized gas obtained by pressurizing the gas, a vacuum pump for sucking a desorption gas containing carbon dioxide desorbed from an adsorbent within the adsorption column, and an introduction pipe for introducing part of the desorption gas into the adsorption column as a cleaning gas. The second separation device includes a concentration unit, and a second pressurization device for supplying to the concentration unit a second pressurized gas obtained by pressurizing the desorption gas. The concentration unit concentrates carbon dioxide contained in the second pressurized gas, and the second pressurized gas is higher in pressure than the first pressurized gas.

A second mode is the recovery apparatus of the first mode which comprises an adjustment mechanism disposed in a pipe which connects the vacuum pump and the concentration unit, wherein the adjustment mechanism includes a bypass pipe for establishing a bypass passage between a suction side and a discharge side of the second pressurization device, and a control valve disposed in the bypass pipe.

A third mode is the recovery apparatus of the first mode or the second mode which comprises an adjustment mechanism disposed in a pipe which connects the vacuum pump and the concentration unit, wherein the adjustment mechanism includes a first gas tank disposed between the vacuum pump and the concentration unit, and a control valve which is disposed between the first gas tank and the concentration unit and adjusts a flow rate of the desorption gas flowing from the first gas tank to the pipe.

A fourth mode is the recovery apparatus of any of the first to third modes which comprises an adjustment mechanism disposed in a pipe which connects the vacuum pump and the concentration unit, wherein the adjustment mechanism includes a second gas tank disposed between the vacuum pump and the concentration unit.

A fifth mode is the recovery apparatus of the second mode, wherein the adjustment mechanism includes a pressure gauge disposed on the suction side of the second pressurization device, and the recovery apparatus further comprises a controller which adjusts an opening of the control valve on the basis of a pressure detected by the pressure gauge.

A sixth mode is the recovery apparatus of the third mode, wherein the adjustment mechanism includes a flowmeter disposed on the downstream side of the first gas tank, and the recovery apparatus further comprises a controller which adjusts an opening of the control valve on the basis of a flow rate detected by the flowmeter.

### EFFECTS OF THE INVENTION

According to the recovery apparatus, the first pressurized gas obtained by pressurizing a carbon dioxide-containing gas by the first pressurization device is supplied to the adsorption column, and the adsorbent within the adsorption column adsorbs carbon dioxide. The desorption gas containing carbon dioxide desorbed from the adsorbent is sucked by the vacuum pump, and part of the desorption gas is introduced into the adsorption column as a cleaning gas. By reducing the amount of the cleaning gas, the desorption gas which is rich in carbon dioxide can be supplied in a large amount to the second separation device. The second pressurized gas obtained by pressurizing the desorption gas by the second pressurization device is supplied to the concentration unit, and the concentration unit concentrates carbon dioxide contained in the second pressurized gas. Since the pressure of the second pressurized gas is higher than the pressure of the first pressurized gas, it is possible to increase the concentration of carbon dioxide in a gas to be recovered. Accordingly, the recovery rate of high-concentration carbon dioxide can be increased.

### BRIEF DESCRIPTION OF THE DRAWINGS

[FIG. 1] FIG. 1 is a piping system diagram of a recovery apparatus in a first embodiment.
[FIG. 2] FIG. 2 is a piping system diagram of a recovery apparatus in a second embodiment.

### MODE FOR CARRYING OUT THE INVENTION

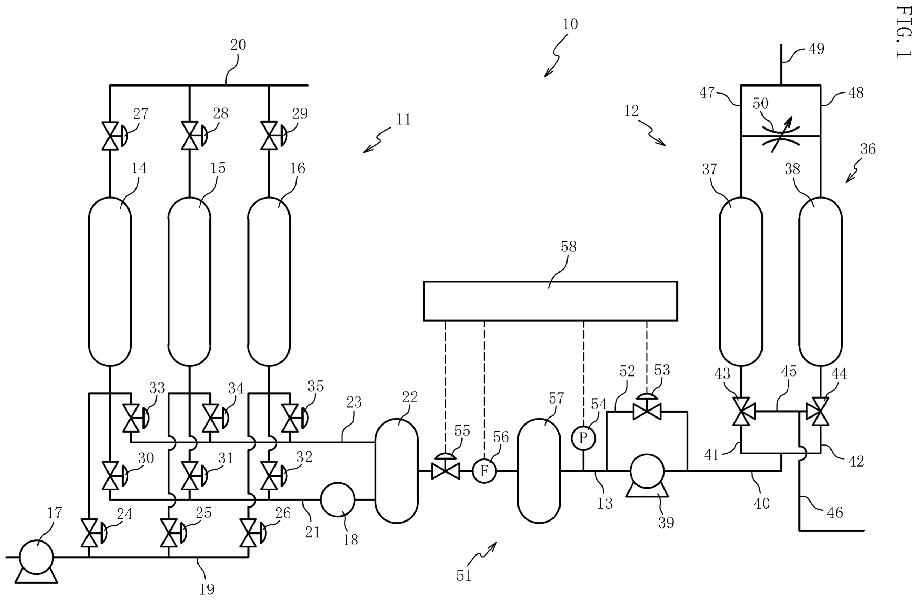

Preferred embodiments of the present invention will now be described with reference to the attached drawing. FIG. 1 is a piping system diagram of a recovery apparatus 10 in a first embodiment. The recovery apparatus 10 is an apparatus for recovering carbon dioxide contained in a gas by using pressure swing adsorption. An example of the gas is exhaust gas from, for example, a power plant, a factory, a waste treatment facility, a natural gas field, an oil field, or the like. The recovery apparatus 10 includes a first separation device 11 and a second separation device 12 located downstream of the first separation device 11 and connected thereto through a pipe 13.

The first separation device 11 is a VPSA-type separation device including adsorption columns 14, 15, and 16, a first pressurization device 17, and a vacuum pump 18. The first pressurization device 17 pressurizes a gas containing carbon dioxide and feeds the pressurized gas to a gas feed pipe 19. The gas pressurized by the first pressurization device 17 (first pressurized gas) is fed to the adsorption columns 14, 15, and 16 through the gas feed pipe 19. The first pressurization device 17 is a device for setting the pressures of the adsorption columns 14, 15, and 16 to appropriate pressures. Examples of the first pressurization device 17 include a compressor and a blower.

An adsorbent for adsorbing carbon dioxide is disposed in each of the adsorption columns 14, 15, and 16. Examples of the adsorbent include activated carbon, zeolite, mesoporous silica, metal-organic frameworks (MOF), porous coordination polymer (PCP). Carbon dioxide contained in the first pressurized gas having entered the adsorption columns 14, 15, and 16 is adsorbed by the adsorbent, and off gases (gases which are lower in carbon dioxide partial pressure than the first pressurized gas) are exhausted from an exhaust pipe 20 (adsorption operation).

When the adsorption columns 14, 15, and 16 are depressurized by the vacuum pump 18 connected to a recovery pipe 21, carbon dioxide is desorbed from the adsorbent, the gas within the adsorption columns 14, 15, and 16, which contains concentrated carbon dioxide, (first desorption gas) enters a first gas tank 22 from the recovery pipe 21 (desorption operation). Part of the first desorption gas is introduced into the adsorption columns 14, 15, and 16, as a cleaning gas, from an introduction pipe 23 connected to the first gas tank 22, whereby unnecessary components within the adsorption columns 14, 15, and 16 are exhausted from the exhaust pipe 20 (cleaning operation). As a result, the concentration of carbon dioxide within the adsorption columns 14, 15, and 16 is increased.

Control valves 24, 25, and 26 are disposed in the gas feed pipe 19 to be used for the adsorption columns 14, 15, and 16, respectively. Control valves 27, 28, and 29 are disposed in the exhaust pipe 20 to be used for the adsorption columns 14, 15, and 16, respectively. Control valves 30, 31, and 32 are disposed in the recovery pipe 21 to be used for the adsorption columns 14, 15, and 16, respectively. Control valves 33, 34, and 35 are disposed in the introduction pipe 23 to be used for the adsorption columns 14, 15, and 16, respectively. Accordingly, by opening and closing the control valves in such a manner that the adsorption columns 14, 15, and 16 sequentially perform the adsorption operation, the desorption operation, and the cleaning operation, the first desorption gas, which is rich in carbon dioxide, can be continuously recovered from the recovery pipe 21. The control valves 24 to 35 operate by receiving electric signals from a controller 58.

The second separation device 12 includes a concentration unit 36 for concentrating carbon dioxide, and a second pressurization device 39 for pressurizing the first desorption gas obtained in the first separation device 11 and feeding the pressurized first desorption gas to the concentration unit 36. In the present embodiment, the second separation device 12 is a PSA-type separation device configured such that the concentration unit 36 includes adsorption columns 37 and 38.

The second pressurization device 39 connected to a pipe 13 is a device for pressurizing the first desorption gas, thereby setting the pressures of the adsorption columns 37 and 38 to appropriate pressures. Examples of the second pressurization device 39 include a compressor and a blower. An adsorbent for adsorbing carbon dioxide is disposed in each of the adsorption columns 37 and 38.

The first desorption gas pressurized by the second pressurization device 39 (second pressurized gas) is fed to the adsorption column 37 through gas feed pipes 40 and 41 and is fed to the adsorption column 38 through the gas feed pipe 40 and another gas feed pipe 42. Carbon dioxide contained in the second pressurized gas having entered the adsorption columns 37 and 38 is adsorbed by the adsorbent, and off gases are exhausted from exhaust pipes 47, 48, and 49. The first pressurization device 17 and the second pressurization device 39 are set so that the pressure of the second pressurized gas becomes higher than the pressure of the first pressurized gas.

Three-way valves (three-port valves) 43 and 44 are disposed in the gas feed pipes 41 and 42, respectively. Two ports of the three-way valve 43 are connected to the gas feed pipe 41, and the remaining one port is connected to a recovery pipe 45. In response to an electric signal from the controller 58, the three-way valve 43 performs switching between a flow path for causing the second pressurized gas to flow from the gas feed pipe 40 to the adsorption column 37 through the gas feed pipe 41, and a flow path for causing the gas to flow from the adsorption column 37 to the recovery pipe 45.

Two ports of the three-way valve 44 are connected to the gas feed pipe 42, and the remining one port is connected to the recovery pipe 45. In response to an electric signal from the controller 58, the three-way valve 44 performs switching between a flow path for causing the second pressurized gas to flow from the gas feed pipe 40 to the adsorption column 38 through the gas feed pipe 42, and a flow path for causing the gas to flow from the adsorption column 38 to the recovery pipe 45. The recovery pipe 46 is connected to an intermediate position of the recovery pipe 45, which connects the three-way valves 43 and 44 to each other.

A variable throttle valve 50 is connected between the exhaust pipe 47 and the exhaust pipe 48. The exhaust pipes 47, 48, and 49 and the variable throttle valve 50 are set so that the ratio between the flow rate in the gas feed pipe 41 or the gas feed pipe 42 and the flow rate in the exhaust pipe 49 falls within a range of, for example, 10:2 to 10:4. The variable throttle valve 50 is a needle valve type, and the flow rate between the exhaust pipe 47 and the exhaust pipe 48 can be adjusted continuously by changing its opening. Usually, the opening of the variable throttle valve 50 is set to be constant.

One example of a method for operating the second separation device 12 will be described. A flow path to the adsorption column 38 is established by operating the three-way valves 43 and 44, and the second pressurization device 39 is operated so as to pressurize the adsorption column 38 by the second pressurized gas. Subsequently, a different flow path to the adsorption column 37 is established by operating the three-way valves 43 and 44, and the second pressurized gas is fed to the adsorption column 37. As a result, carbon dioxide contained in the second pressurized gas is adsorbed by the adsorbent, and off gases (gases which are lower in carbon dioxide partial pressure than the second pressurized gas) are exhausted from the exhaust pipes 47 and 49 (adsorption operation). The off gases partially enter the adsorption column 38 through the variable throttle valve 50.

Meanwhile, the pressure of the adsorption column 38 decreases to a pressure near the atmospheric pressure. As a result, carbon dioxide is desorbed from the adsorbent of the adsorption column 38 (desorption operation). The second desorption gas containing carbon dioxide desorbed from the adsorbent flows through the gas feed pipe 42 and the recovery pipe 45 and is recovered from the recovery pipe 46. The off gases having flowed from the adsorption column 37 into the adsorption column 38 via the variable throttle valve 50 relatively lower the carbon dioxide partial pressure of the adsorption column 38, promote desorption of carbon dioxide from the adsorbent, push the second desorption gas within the adsorption column 38 into the recovery pipe 46, and clean the adsorption column 38 (purge operation).

When setting of the flow paths of the three-way valves 43 and 44 is repeatedly switched by the controller 58, the adsorption operation of the adsorption column 37 and the desorption operation and the purge operation of the adsorption column 38, and the desorption operation and the purge operation of the adsorption column 37 and the adsorption operation of the adsorption column 38 are performed alternatingly. By virtue of this operation, the second desorption gas containing concentrated carbon dioxide can be continuously recovered from the recovery pipe 46.

In the recovery apparatus 10, sensors (not shown) for detecting the flow rate of the second desorption gas flowing through the recovery pipe 46 and the concentration of carbon dioxide are provided. The controller 58 controls various devices such as the pressurization devices 17 and 39, the control valves, etc. on the basis of the the flow rate of the second desorption gas and the concentration of carbon dioxide detected by the sensors so that the flow rate of the second desorption gas and the concentration of carbon dioxide approach their target values.

In the recovery apparatus 10, the first desorption gas containing carbon dioxide desorbed from the adsorbent of the first separation device 11 is sucked by the vacuum pump 18, and part of the first desorption gas is introduced from the introduction pipe 23 into the adsorption columns 14, 15, and 16 as a cleaning gas. By appropriately reducing the amount of the cleaning gas, the first desorption gas which is rich in carbon dioxide can be supplied in a large amount to the second separation device 12. The second pressurization device 39 pressurizes the first desorption gas, and the pressurized first desorption gas; i.e., the second pressurized gas is supplied to the concentration unit 36, and the concentration unit 36 concentrates carbon dioxide contained in the second pressurized gas. Since the pressure of the second pressurized gas is higher than the pressure of the first pressurized gas, it is possible to increase the concentration of carbon dioxide in the second desorption gas having undergone the processing by the concentration unit 36. Accordingly, the recovery rate of high-concentration carbon dioxide can be increased.

Since the PSA-type second separation device 12 can reduce the amount of the adsorbent loaded into the adsorption columns 37 and 38 as compared with the VPSA-type first separation device 11, the volumes of the adsorption columns 37 and 38 can be made smaller than the volumes of the adsorption columns 14, 15, and 16. Accordingly, the second separation device 12 can be made smaller than the first separation device 11. Since the pressure of the first pressurized gas is lower than the pressure of the second pressurized gas, the electricity intensity of the first separation device 11 including the first pressurization device 17 for producing the first pressurized gas, etc. can be made smaller than the electric power intensity (the electric power required to separate a unit volume of gas) of the second separation device 12. Accordingly, reduction of the size and electricity intensity of the recovery apparatus 10 can be realized.

Since the second separation device 12 does not have a mechanism for introducing part of the second desorption gas into the adsorption columns 37 and 38 as a cleaning gas, the carbon dioxide recovery rate can be increased by an amount corresponding to the amount of the second desorption gas consumed as a cleaning gas.

An adjustment mechanism 51 is disposed in the pipe 13 which connects the first separation device 11 and the second separation device 12. The adjustment mechanism 51 is a mechanism which buffers the processing capacity of the first separation device 11 and the processing capacity of the second separation device 12. By virtue of the adjustment mechanism 51, when the second separation device 12 needs the first desorption gas, the first desorption gas can be sufficiently supplied to the second separation device 12.

An example of the adjustment mechanism 51 is an adjustment mechanism constituted by a bypass pipe 52 for establishing a bypass passage between the suction side and the discharge side of the second pressurization device 39, and a control valve 53 disposed in the bypass pipe 52. Another example of the adjustment mechanism 51 is an adjustment mechanism constituted by a first gas tank 22 disposed between the recovery pipe 21 and the introduction pipe 23, and a control valve 55 disposed in the pipe 13 located downstream of the first gas tank 22. Another example of the adjustment mechanism 51 is a second gas tank 57 disposed in the pipe 13 between the vacuum pump 18 and the second pressurization device 39.

In the present embodiment, the adjustment mechanism 51 is configured such that the bypass pipe 52 is disposed downstream of the first gas tank 22, and the second gas tank 57 is disposed between the first gas tank 22 and the bypass pipe 52. However, the configuration of the adjustment mechanism 51 is not limited thereto. Of course, it is possible to omit the second gas tank 57 and the bypass pipe 52 and dispose the first gas tank 22 and the control valve 55, or to omit the first gas tank 22, the control valve 55, and the bypass pipe 52 and dispose the second gas tank 57, or to omit the first gas tank 22, the control valve 55, and the second gas tank 57 and dispose the bypass pipe 52 and the control valve 53.

The first gas tank 22 stores the first desorption gas containing carbon dioxide concentrated by the first separation device 11, and the control valve 55 sets a flow rate at which the first desorption gas stored in the first gas tank 22 is caused to flow to the pipe 13. The opening of the control valve 55 is set in accordance with the flow rate of the first desorption gas needed by the second separation device 12. In the case where the processing capacity of the first separation device 11 is made larger than the processing capacity of the second separation device 12, it is possible to buffer the processing capacity of the first separation device 11 and the processing capacity of the second separation device 12 by the first gas tank 22 and the control valve 55.

The flowmeter 56 is disposed in the pipe 13 located downstream of the control valve 55. The controller 58 adjusts the opening of the control valve 55 on the basis of the flow rate detected by the flowmeter 56. When the flow rate detected by the flowmeter 56 is smaller than the flow rate needed by the second separation device 12, the controller 58 increases the degree of opening of the control valve 55. When the flow rate detected by the flowmeter 56 is larger than the flow rate (threshold value) needed by the second separation device 12, the controller 58 decreases the degree of opening of the control valve 55. As a result, even in the case where the processing capacity of the first separation device 11 is balanced with the processing capacity of the second separation device 12, it is possible to buffer the processing capacity of the first separation device 11 and the processing capacity of the second separation device 12.

The second gas tank 57 stores the first desorption gas containing carbon dioxide concentrated by the first separation device 11. The flow rate at which the first desorption gas stored in the second gas tank 57 is caused to flow to the second pressurization device 39 is set by the diameter of the pipe 13 located downstream of the second gas tank 57. The flow rate at which the second gas tank 57 causes the first desorption gas to flow to the second pressurization device 39 is set to be equal to the flow rate of the first desorption gas needed by the second separation device 12. In the case where the processing capacity of the first separation device 11 is made larger than the processing capacity of the second separation device 12, it is possible to buffer the processing capacity of the first separation device 11 and the processing capacity of the second separation device 12 by the second gas tank 57.

When the control valve 53 disposed in the bypass pipe 52 for establishing a bypass passage between the suction side and the discharge side of the second pressurization device 39 is open, the first desorption gas moves through the bypass pipe 52 from the side where the pressure is high to the side where the pressure is low. When the pressure on the suction side of the second pressurization device 39 is lower than the pressure on the discharge side of the second pressurization device 39, the first desorption gas moves from the discharge side to the suction side through the bypass pipe 52, whereby the pressure on the suction side can be increased. Since the pressure on the suction side is approximately equal to the pressure of the introduction pipe 23, when the pressure on the suction side is low, there is the possibility that the pressures of the adsorption columns 14, 15, and 16 during the adsorption operation decrease, the amount of carbon dioxide adsorbed by the adsorbent decreases, and the concentration of carbon dioxide in the first desorption gas decreases. In the case where the bypass pipe 52 is disposed, since the pressures of the adsorption columns 14, 15, and 16 of the first separation device 11 can be ensured, the carbon dioxide concentration in the first desorption gas can be ensured.

The pressure gauge 54 is disposed in the pipe 13 located on the suction side of the second pressurization device 39. The controller 58 opens and closes the control valve 53 on the basis of the pressure detected by the pressure gauge 54. When the pressure detected by the pressure gauge 54 is equal to or higher than a target value for the pressures of the adsorption columns 14, 15, and 16 during the adsorption operation, the controller 58 closes the control valve 53. When the detected pressure is lower than the target value for the pressures of the adsorption columns 14, 15, and 16 during the adsorption operation, the controller 58 opens the control valve 53. Since the pressure on the suction side of the second pressurization device 39 and the pressure of the introduction pipe 23 can be increased by this operation, it is possible to ensure the pressures of the adsorption columns 14, 15, and 16 of the first separation device 11 and thereby ensure the carbon dioxide concentration in the first desorption gas.

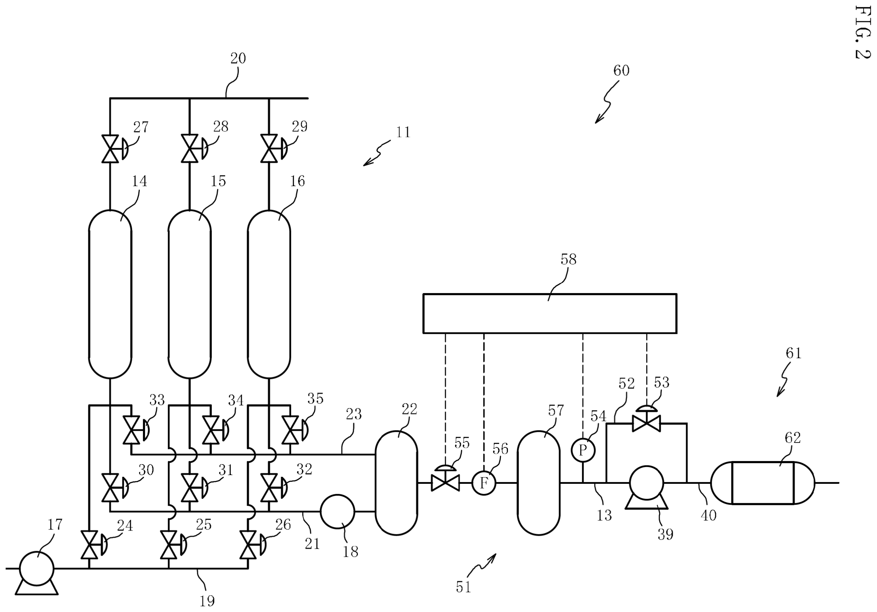

A second embodiment will be described with reference to FIG. 2. In the first embodiment, there has been described the case where the concentration unit 36 of the second separation device 12 includes the adsorption columns 37 and 38 filled with an adsorbent (solid absorbent). In contrast, in the second embodiment, there will be described the case where a concentration unit 62 has a carbon dioxide separation membrane. In the second embodiment, portions identical to the portions described in the first embodiment are denoted by the same reference numerals, and their repeated descriptions are omitted.

FIG. 2 is a piping system diagram of a recovery apparatus 60 in the second embodiment. The recovery apparatus 60 includes the first separation device 11 and a second separation device 61 disposed on downstream of the first separation device 11 and connected thereto through the pipe 13. The adjustment mechanism 51 is disposed between the first separation device 11 and the second separation device 61. The second separation device 61 includes a second pressurization device 39 which pressurizes the first desorption gas obtained in the first separation device 11 and supplies the pressurized first desorption gas to the concentration unit 62, and the concentration unit 62 which concentrates carbon dioxide.

The concentration unit 62 includes a separation membrane having selective permeability to carbon dioxide. The separation membrane separates carbon dioxide by using a difference in gas moving speed based on differences in molecular size and affinity to the material of the membrane. The gas pressure on the supply side is made higher than the gas pressure on the side toward which carbon dioxide permeates. Any of known separation membranes such as a molecular sieve membrane, a dendrimer membrane, an amine group-containing membrane, etc. may be selected and used. No limitation is imposed on the shape of the separation membrane, and an arbitrary shape such as a plate-like shape, a tubular shape, a hollow fiber shape, or the like may be selected.

In the recovery apparatus 60, the second pressurization device 39 pressurizes the first desorption gas, the pressurized first desorption gas; i.e., the second pressurized gas is supplied to the concentration unit 62, and the concentration unit 62 concentrates carbon dioxide contained in the second pressurized gas. Since the pressure of the second pressurized gas is higher than the pressure of the first pressurized gas, the concentration of carbon dioxide in the second desorption gas having undergone the processing by the concentration unit 62 can be increased. Accordingly, the recovery rate of high-concentration carbon dioxide can be increased.

The concentration unit 62 containing a separation membrane can reduce the electric power intensity (the electric power required to separate a unit volume of gas) as compared with the PSA-type concentration unit 36 in the first embodiment. Accordingly, the recovery apparatus 60 whose electric power intensity is small can be realized.

The present invention has been described on the basis of embodiments. However, it is easily inferred that the present invention is not limited to the above-described embodiments and various improvements and modifications can be made without departing from the spirit of the invention.

For example, the piping system of the recovery apparatus 10 is one example, and can be set appropriately. In the embodiment, there has been described the case where the first separation device 11 includes three adsorption columns 14, 15, and 16, and the second separation device 12 includes two adsorption columns 37 and 38. However, the number of adsorption columns in each separation device is not limited to three or two. The number of adsorption columns in each of the first separation device 11 and the second separation device 12 is appropriately set to 1 or greater.

In the first embodiment, there has been described the case where the PSA-type second separation device 12 is provided downstream of the VPSA-type first separation device 11. However, the configuration of the recovering apparatus is not limited thereto. Of course, it is possible to provide a VPSA-type second separation device on the downstream of the VPSA-type first separation device 11.

In the embodiment, there has been described the case where the second separation device 12 is configured such that the exhaust pipe 47 and the exhaust pipe 48 are connected by using the variable throttle valve 50. However, the configuration of the second separation device 12 is not limited thereto. In place of the variable throttle valve 50, there may be provided a plurality of orifices which are connected in parallel between the exhaust pipe 47 and the exhaust pipe 48, and on-off valves respectively provided for the orifices. In this case as well, the flow rate between the exhaust pipe 47 and the exhaust pipe 48 can be adjusted by controlling the on-off valves. Of course, it is possible to establish communication between the exhaust pipe 47 and the exhaust pipe 48 by using an orifice having a fixed opening, thereby eliminating the necessity of adjusting the flow rate between the exhaust pipe 47 and the exhaust pipe 48. In addition, of course, it is possible to dispose a plurality of valves for realizing the functions of the three-way valves in place of the three-way valves 43 and 44.

### DESCRIPTION OF REFERENCE NUMERALS

10, 60 recovery apparatus
11 first separation device
12, 61 second separation device
13 pipe
14, 15, 16 adsorption column
17 first pressurization device
18 vacuum pump
23 introduction pipe
36, 62 concentration unit
39 second pressurization device
22 first gas tank
51 adjustment mechanism
52 bypass pipe
53 control valve
54 pressure gauge
55 control valve
56 flowmeter
57 second gas tank
58 controller

## Claims

1. A recovery apparatus for recovering carbon dioxide, comprising:
a first separation device for separating carbon dioxide from a carbon dioxide-containing gas by pressure swing adsorption; and
a second separation device disposed downstream of the first separation device and connected thereto,
wherein the first separation device includes:
an adsorption column,
a first pressurization device for supplying to the adsorption column a first pressurized gas obtained by pressurizing the gas,
a vacuum pump for sucking a desorption gas containing carbon dioxide desorbed from an adsorbent within the adsorption column, and
an introduction pipe for introducing part of the desorption gas into the adsorption column as a cleaning gas,
wherein the second separation device includes:
a concentration unit, and
a second pressurization device for supplying to the concentration unit a second pressurized gas obtained by pressurizing the desorption gas, and
wherein the concentration unit concentrates carbon dioxide contained in the second pressurized gas, and
the second pressurized gas is higher in pressure than the first pressurized gas.

2. The recovery apparatus according to claim 1, further comprising an adjustment mechanism disposed in a pipe which connects the vacuum pump and the concentration unit,
wherein the adjustment mechanism includes:
a bypass pipe for establishing a bypass passage between a suction side and a discharge side of the second pressurization device, and
a control valve disposed in the bypass pipe.

3. The recovery apparatus according to claim 1, further comprising an adjustment mechanism disposed in a pipe which connects the vacuum pump and the concentration unit,
wherein the adjustment mechanism includes:
a first gas tank disposed between the vacuum pump and the concentration unit, and
a control valve which is disposed between the first gas tank and the concentration unit and adjusts a flow rate of the desorption gas flowing from the first gas tank to the pipe.

4. The recovery apparatus according to claim 1, further comprising an adjustment mechanism disposed in a pipe which connects the vacuum pump and the concentration unit,
wherein the adjustment mechanism includes a second gas tank disposed between the vacuum pump and the concentration unit.

5. The recovery apparatus according to claim 2, wherein the adjustment mechanism includes a pressure gauge disposed on the suction side of the second pressurization device, and
wherein the recovery apparatus further comprises a controller which adjusts an opening of the control valve on the basis of a pressure detected by the pressure gauge.

6. The recovery apparatus according to claim 3, wherein the adjustment mechanism includes a flowmeter disposed on the downstream side of the first gas tank, and
wherein the recovery apparatus further comprises a controller which adjusts an opening of the control valve on the basis of a flow rate detected by the flowmeter.
